# EUROPEAN PATENT SPECIFICATION

(11) **EP 1 497 950 B1**
(45) Date of publication and mention of the grant of the patent: **31.08.2005**
(21) Application number: 02770125.9
(22) Date of filing: 28.10.2002
(51) Int. Cl.: H04L 12/24

(54) **SYSTEM AND METHOD FOR DYNAMICALLY ALTERING CONNECTIONS IN A DATA PROCESSING NETWORK**
SYSTEM UND VERFAHREN ZUR DYNAMISCHEN ÄNDERUNG VERBINDUNGEN IN EINEM DATENVERARBEITUNGNETZWERK
SYSTEME ET PROCEDE DE MODIFICATION DYNAMIQUE DES CONNEXIONS DANS UN RESEAU DE TRAITEMENT DE DONNEES

(30) Priority: 25.04.2002 US 132404
(43) Date of publication of application: 19.01.2005
(73) Proprietor: International Business Machines Corporation, Armonk, N.Y. 10504 (US)
(72) Inventor: BROWN Deanna Lynn Quigg c/o IBM UK Ltd., Hampshire SO21 2JN (GB); FERNANDES Lilian Sylvia c/o IBM UK Ltd., Hampshire, SO21 2JN (GB); JAIN, Vinit, Austin, TX 78717 (US); VALLABHANENI, Vasu, Austin, TX 78759 (US)
(74) Representative: Ling, Christopher John
(86) International application number: PCT/GB2002/004879
(87) International publication number: WO 2003/092220

(56) References cited:
- US-A- 5 999 974
- HUANG J ET AL: "An open solution to fault-tolerant Ethernet: design, prototyping, and evaluation" PERFORMANCE, COMPUTING AND COMMUNICATIONS CONFERENCE, 1999 IEEE INTERNATIONAL SCOTTSDALE, AZ, USA 10-12 FEB. 1999, PISCATAWAY, NJ, USA,IEEE, US, 10 February 1999 (1999-02-10), pages 461-468, XP010323654 ISBN: 0-7803-5258-0

## Description

### 1. Field of the Invention

The present invention generally relates to the field of data processing networks and more particularly to a network and method permitting an established network connection to migrate its source or destination dynamically in response to changing loads, malfunctions, or other network characteristics.

### 2. Background of Related Art

In a conventional data processing network, client and server systems are connected to the network through a dedicated adapter typically referred to as a network interface card (NIC) . Historically, a network connection between any client-server pair in the network is integrally bound to the NIC's of the respective devices. If a connection's hardware elements are non-functional or bandwidth constricted, there is no opportunity to alter the connection characteristics to "move" the connection to another piece of hardware that is currently more capable of handling the connection. Instead, the existing connection must be terminated and a new connection established at the cost of potentially significant network overhead. The overhead penalty is particularly relevant in high availability server environments where a primary objective is to provide the highest level of responsiveness to a potentially large number of clients. It would be desirable, therefore, to implement a network method and system that enables network connections to define and alter their configurations dynamically in response to factors such as network loading or hardware failures.

Huang, J et al., "An open solution to fault-tolerant Ethernet: design, prototyping and evaluation", Performance, Computing and Communications Conference, 1999 IEEE International, , pages 461-468 discloses a node for use in a fault-tolerant Ethernet architecture which incorporates failure detection for detecting failure of a network connection by sending out "I am alive" messages on each of two network connections. If a node detects an "I am alive" message on a first one of the two network connections, but not on a second one of the two network connections within a predetermined period of time, then the node indicates that a failure has occurred on the second one of the network connections and all traffic is routed through the first one of the network connections. The routing is achieved by instructing a NIC switch to use only the first one of the network connections.

### DISCLOSURE OF THE INVENTION

The problems identified above are in large part addressed by a data processing network and system in which a network connection is enabled to migrate among a multitude of available servers and/or clients to provide the connection using the most efficient available set of resources. Typically, a server and client would indicate their respective support of this connection migration feature when the connection is established. An operating system or application program would monitor existing connections for characteristics including basic functionality and performance. If an existing connection were found to be faulty or low performing and the client and server associated with the connection supported connection migration, the software would then determine if an alternative and more effective connection existed. Upon discovering such a connection, the parameters that define the connection would be altered thereby effecting a migration of the connection to the preferred hardware. In an embodiment in which the network connections are established with a transmission control protocol (TCP), each connection includes a four-tuple that fully defines the connection, namely, a source IP address, a source port number, a destination IP address, and a destination port number. By altering one or more of the connection's defining four-tuple, the invention as claimed in the data processing system of claim 1, the method of managing a network connection of claim 8 and the computer program of claim 14 is configured to migrate the connection to a NIC or system that is functioning more efficiently.

### BRIEF DESCRIPTION OF THE DRAWINGS

Other objects and advantages of the invention will become apparent upon reading the following detailed description and upon reference to the accompanying drawings in which:
FIG 1 is a block diagram of selected elements of a data processing network suitable for implementing one embodiment of the present invention;
FIG 2 is a block diagram of selected hardware elements of a data processing system suitable for use in the data processing network of FIG 1;
FIG 3 is a block diagram of selected elements of the data processing system of FIG 2;
FIG 4 is a conceptual illustration of a network connection;
FIG 5 is a block diagram of selected elements of the network connection of FIG 4 emphasizing the connection migration features of the present invention; and
FIG 6 is a conceptual depiction of various connection migration examples contemplated by the present invention.

### DETAILED DESCRIPTION OF THE INVENTION

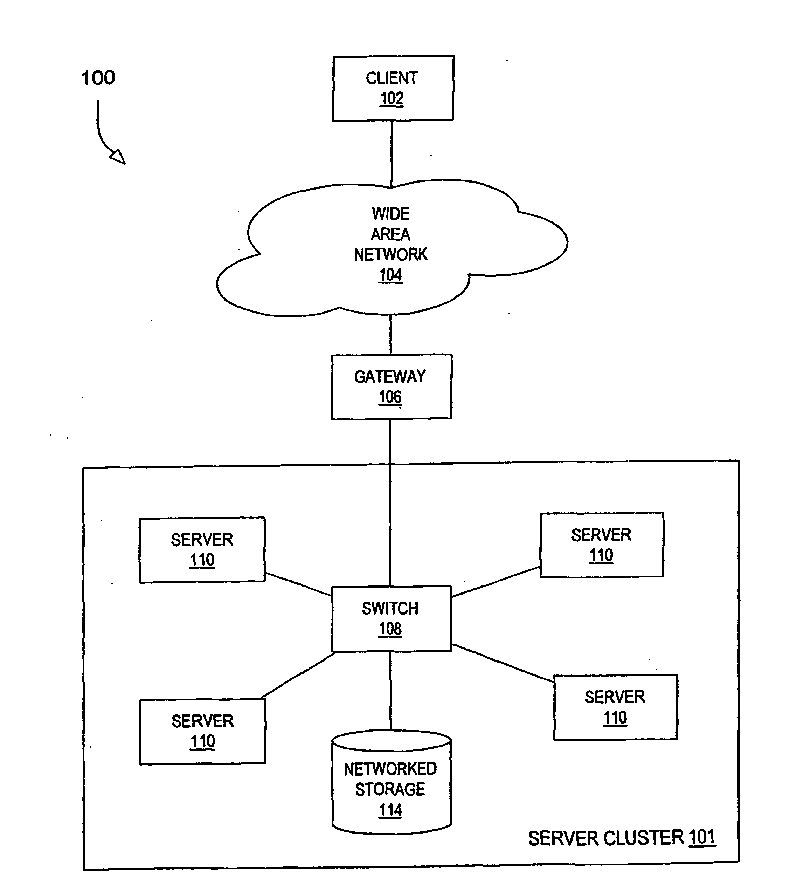

Turning now to the drawings, FIG 1 is a block diagram of selected elements of a data processing network 100 suitable for implementing one embodiment of the invention. Those skilled in the field of network architecture will appreciate that this particular implementation is but one of many possible configurations. This particular embodiment is illustrated at least in part because of its generality and because it is representative of an increasingly large number of network implementations. In the depicted embodiment, network 100 includes a client system (client) 102 connected to a wide area network 104. Client 102 typically includes a client application program such as a conventional web browser that is executing on a client device.

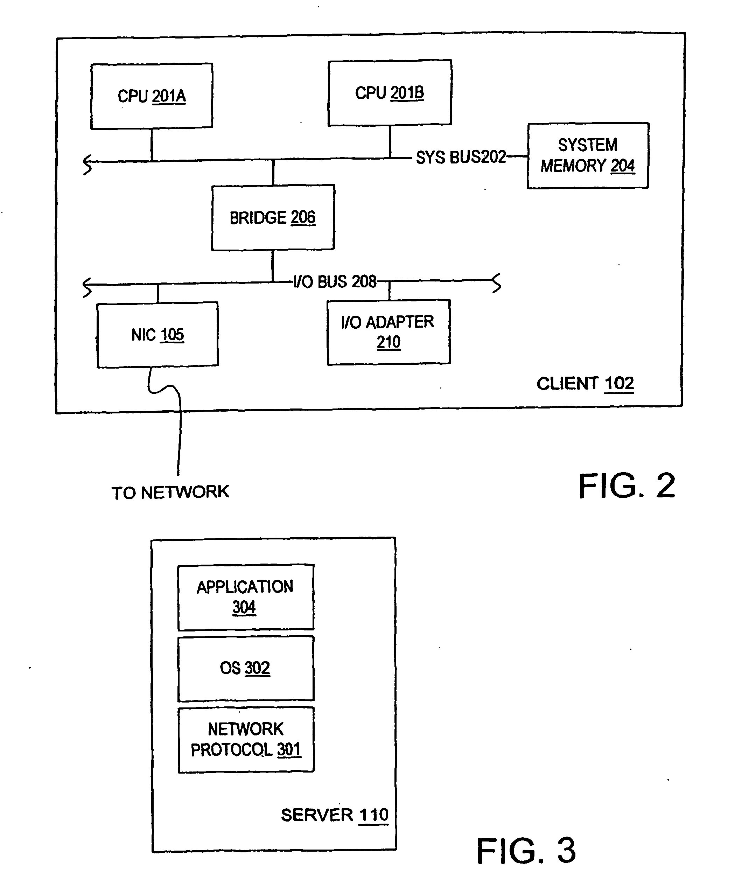

The client device may comprise a desktop or laptop personal computer, a network computer or workstation, or another network aware device such as a personal digital assistant (PDA) or an Internet enabled telephone. Referring briefly to FIG 2, a block diagram of selected hardware elements of an exemplary client 102 is shown. Client 102 typically includes one or more general purpose microprocessors (CPU's) 201a-201n (generically or collectively CPU(s) 201) interconnected to a system memory 204 via a system bus 202. A bridge device 206 interconnects system bus 202 with an I/O bus 208. I/O bus typically conforms with an industry standard bus specification such as, for example, the Peripheral Components Interconnect (PCI) Local Bus Specification from the PCI Special Interest Group (www.pcisig.org). One or more peripheral or I/O devices are typically connected to I/O bus 208. The depicted embodiment illustrates a Network Interface Card (NIC 105) and a generic I/O adapter 210 connected to I/O bus 208. NIC 105 connects the resources of client 201 to a network medium. In a common implementation, NIC 105 connects client 102 to a local area network such as an Ethernet network. Returning to FIG 1, client 102 is illustrated as remotely connected to server network 101 through an intervening wide area network (WAN) 104. Other clients (not depicted in FIG 1) may be locally connected to the server network.

wide area network 104 typically includes various network devices such as gateways, routers, hub, and one or more local area networks (LANs) that are interconnected with various media possibly including copper wire, coaxial cables, fiber optic cables, and wireless media. Wide area network 104 may represent or include portions of the Internet.

In the depicted embodiment, a server network or server cluster 101 is connected to client 102 through a gateway 106 connected to WAN 104. Server cluster 101 is typically implemented as a LAN that includes one or more servers 110 (four of which are shown). Each server 110 may incorporate substantially the same design features as the client system depicted in FIG 2 (i.e., one or more microprocessors connected to a shared system memory and having I/O adapters including a NIC connecting the server to a local network). The servers 110 may be networked together over a shared medium such as in a typical Ethernet or token ring configuration. The servers 110 of server cluster 101 typically have access to a persistent (non-volatile) storage medium such as a magnetic hard disk. In addition, any server 110 may include its own internal disk and disk drive facilities. In an increasingly prevalent configuration, persistent storage is provided as a networked device or set of devices. Networked storage is identified in FIG 1 by reference numeral 114 and may be implemented as one or more network attached storage (NAS) devices, a storage area network (SAN) or a combination thereof.

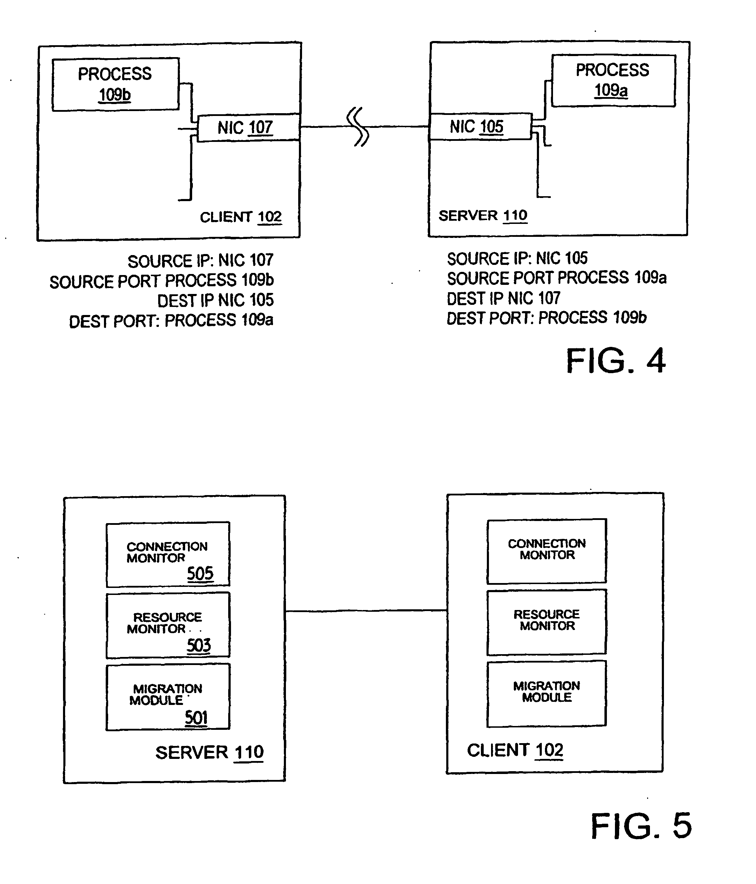

From a software perspective, clients 102 and servers 110 typically use software components illustrated in FIG 3 including one or application programs 304, an operating system 302, and a network protocol 301. Application programs 304 may include database applications, web browsers, graphic design applications, spreadsheets, word processors, and the like. Operating system 302 is a general term for software components that manage the resources of the system. Network protocol 301 identifies a suite of software components configured to enable the applications executing on a device to communicate information over the network. Although network protocol 301 is illustrated as distinct from operating system 302 in FIG 3, the protocol components may comprise components of the operating system.

Application programs and operating system routines launch processes when they are executed. A process executing on server devices such as server device 110 typically transmits data to a requesting process that is executing on a client as a sequence of one or more network packets. Each packet includes a payload comprising a portion of the requested data as well as one or more header fields depending upon the network protocol in use. In an embodiment where WAN 104 represents the Internet, for example, packets transmitted between server 110 and client 102 are typically compliant with the Transmission Control Protocol/Internet Protocol (TCP/IP) as specified in RFC 793 and RFC 791 of the Internet Engineering Task Force (www.ietf.org).

To identify the separate processes that a TCP enabled device or system may handle, TCP provides a unique address for each client-server connection. These unique addresses include an IP address and a port identifier. The IP address identifies a physical location or destination on the network such as a particular NIC. The port identifier is needed because multiple processes may be sharing the same hardware resource (i.e., the same physical resource). The combination of an IP address and a port is referred to as a "socket" that is unique throughout the network. A connection is fully specified by a pair of sockets with one socket typically representing the client side socket and the socket representing the server side socket.

Referring now to FIG 4, a conceptualized illustration of a client-server connection is depicted. The illustrated connection is representative of a TCP compliant connection between a process 109a executing on server 110 and process 109b executing on client 102. The connection is defined by a pair of sockets. From the perspective of server 110, the source socket is determined by the combination of the IP address of NIC 105 and the port number associated with process 109a while the destination socket is determined by the combination of the IP address of NIC 107 and the port number associated with process 109b on client 102. From the perspective of client 102, the source and destination sockets are reversed such that NIC 107 and process 109b defined the source socket while NIC 105 and process 109a define the destination socket. In a conventional data processing network, the connection definition is static. The source and destination sockets on both sides of the connection are invariant. The present invention addresses this limitation by enabling the client and server to alter an existing connection definition cooperatively when it would be advantageous to do so. The connection migration functionality is preferably achieved by extending the features of the network protocol. In this embodiment, both parties to a connection must agree beforehand that they support connection migration. If either party does not support the extension, the feature is disabled by the other party.

Portions of the invention may be implemented in software comprised of a sequence of computer executable instructions stored on a computer readable medium. When the instructions are being executed, they are typically stored in a volatile storage medium such as the system memory (typically comprising DRAM) of a client or server system or an internal or external cache memory (typically comprising SRAM). At other times, the software may be stored on a non-volatile medium such as a hard disk, floppy diskette, CD ROM, DVD, flash memory card or other electrically erasable medium, magnetic tape, and the like. In addition, portions of the software may be distributed over various elements of the network. For example, portions of the software may reside on a client system while other portions reside on a server system.

Referring now to FIG 5, selected software elements according to one embodiment of the present invention are depicted. In the depicted embodiment, a server 110 includes a migration module 501, a resource monitor 503, and a connection monitor 505. These elements coexist with the server's operating system and network protocol modules. The connection monitor 505 is responsible for monitoring the performance of one or more network connections in which server 110 is participating. Connection monitor 505 may be implemented as a stand-alone application program or provided as an operating system or network protocol utility. Typically, connection monitor 505 is configured to gauge one or more performance characteristics of the server's active network connections. The monitored performance characteristics may include basic connection functionality and connection throughput. Basis functionality may be determined by monitoring the number or frequency of time out events, where a time out event represents a packet that was served but not acknowledged within a prescribed time period. Connection throughput may be monitored by, for example, monitoring the time that elapses between the delivery of a packet and the receipt of an acknowledgement for the packet. From this information and information about the size of each packet, connection monitor 505 is configured to arrive at an estimate of the connection's "speed."

Migration module 501 is configured to interact with connection monitor 505 to determine if a particular connection is a candidate for migration. In one embodiment, connection monitor 505 communicates to migration module whenever a monitored performance characteristic of a connection is non-compliant with a standard or threshold. If, for example, a monitored connection's basic functionality is determined to be faulty, connection monitor 505 is configured to report the connection to migration module 501. The performance standards that define when a monitored connection is reported as a candidate for migration may comprise a set of predetermined and standards. Alternatively, the performance standards may be determined dynamically based on the connections' recent history.

In response to connection monitor 505 reporting a monitored connection as falling below some performance standard, migration module 501 will first determine if the other party to the connection supports connection migration. When a connection is established with a client or server that supports connection migration, the client or server will query the other party to determine if the other party supports migration. If both parties to the connection support migration, both parties will tag the connection appropriately. A party may attempt to determine whether the other party supports migration by sending a special purpose packet or including a special purpose header field when the connection is being established. If either party does not support the migration feature, the migration feature is disabled by the other party.

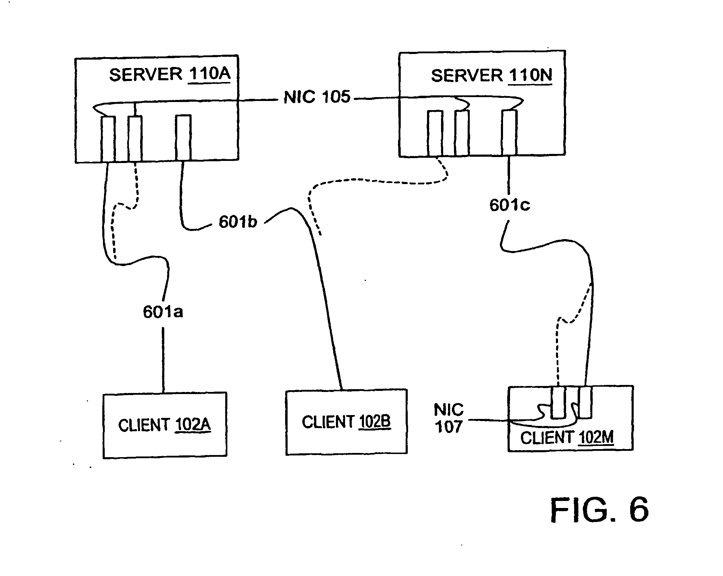

Assuming that both parties to a connection support the migration feature, migration module 501 is configured to attempt to migrate (modify) an existing connection in response to a prompt from connection monitor 505. In the embodiment depicted in FIG 5, migration module 501 will consult resource monitor 503 to determine if alternative resources are available for providing a connection. Resource monitor 503 is typically configured to maintain an inventory of resources available for providing network connections. Referring momentarily to FIG 6, each server 110 and each client 102 may have multiple network interface cards. Server 110 may be implemented with, for example, an pSeries 690 server from IBM Corporation having as many as 160 hot-pluggable PCI slots each capable of supporting a network interface card. Similarly, high availability client systems may also have multiple network adapters. When a server or client includes multiple network adapters, the additional adapters may be available as alternative resources for providing a particular network connection. When migration module 501 attempts to migrate a connection, it queries resources monitor 503 to provide a list of available resources.

In one embodiment, resource monitor 503 may simply provide the list of all the available resources each time migration module 501 initiates a request. In another embodiment, resource monitor 503 may indicate the available resources selectively or in a prioritized manner depending upon various factors including, for example, the identity of the client. This embodiment contemplates the prioritization of available resources to provide differing levels of service to different clients. A service provider could offer to provide different classes of service to different classes of clients. Resource monitor 503 may make resources available to a client that subscribes to the highest class of service that are not made available to a client subscribing to a lower class of service. Other prioritization criteria may also be used to determine which resources are available to a client.

The client 102 depicted in FIG 5 is shown as including software components substantially analogous to the components indicated for server 110. Thus, each client 102 may include its migration module, connection monitor, and resource monitor. In this manner, connection performance may be monitored on both sides of the connection and both sides of the connection may initiate a migration of the connection to other resources.

When a connection migration is initiated by either party to the connection, migration module 501 will begin the migration by suspending the transmission of any new packets. When all outstanding packets (i.e., packets that have been delivered, but not acknowledged) are either acknowledged or timed-out, migration module 501 can then alter the socket definition for either one or both of the connection's parties. After the socket definition(s) are changed, the four-tuple defining the connection is then altered accordingly on the client and server side. Thus, if a particular connection migration involves client 102 changing its socket definition while the socket for server 110 remains the same, the client side four tuple is subsequently modified by changing the source IP address / port number combination to reflect the modified client-side socket definition. Server 110 would then also modify its connection four-tuple by changing its destination IP address / port number combination.

Referring now to FIG 6 again, a conceptualized illustration of the connection migration contemplated by the present invention is presented. In this depiction, a set of network connections 601a-601c are connected between a set of clients 102a-102m and a set of servers 110a-110n. Each client 102 has at least one NIC 107 available for providing one or more network connections while each server 110 has at least one NIC 105. In FIG 6, three types of connection migration are illustrated. Connection 601a, which represents an intra-server migration, is shown in solid line as connected between a first NIC 105 of server 110a where the solid line represents the original network connection. After connection migration, connection 601a is between client 102a and a second NIC of server 110a as shown in the dotted line. Connection 601b represents an inter-server migration in which the original connection, between client 102b and a first server 110a is migrated to a second connection (shown by the dashed line) between server 102b and a second server 110n. This inter-server migration might be implemented, for example, in a server cluster environment as depicted in FIG 1 where server cluster 101 includes multiple servers 110 all connected to a common switch 108. In this environment, the migration modules 501 and connection monitors 505 might be distributed to each server 110 while resource monitor 503 might be installed on switch 108 where the resources available throughout the cluster can be centrally monitored. Connection 601c illustrates an intra-client connection migration in which a connection initially defined by a first NIC 107 on client 102m is migrated to a second NIC on the client. By enabling intra-server, inter-server, and intra-client migration, the present invention maximizes system flexibility.

## Claims

1. A data processing system (100) including at least one processor (201) connected to memory (204), comprising:
computer means (505) for monitoring at least one performance characteristic of a network connection;
computer means (503) for maintaining an inventory of resources available for providing network connections; and
computer means (501) for altering the connection, responsive to determining the monitored performance characteristic as indicating a problem with the network connection, by changing at least one resource defining the connection to a resource selected from the inventory of available resources by changing the Internet Protocol, IP, address of a socket defining the connection.

2. A data processing system as claimed in claim 1, wherein the monitored performance characteristic comprises the existence of the connection between a client (102) and a server (110).

3. A data processing system as claimed in claim 2, wherein the existence of the connection is monitored by detecting the number of packet time out events.

4. A data processing system as claimed in claim 1, wherein the monitored performance characteristic is indicative of the response time of the connection.

5. A data processing system as claimed in claim 1, wherein the socket defining the connection is a server (110) side socket.

6. A data processing system as claimed in claim 1. further comprising computer means for identifying a client (102) and a server (110) as supporting migration of the connection prior to establishing the connection.

7. A data processing system as claimed in claim 1, wherein the socket defining the connection is a client (102) side socket.

8. A method of managing a network connection between a client (102) and a server (110) in a data processing network, comprising:
monitoring at least one performance characteristic of the connection;
maintaining an inventory of resources available for providing network connections; and
responsive to determining the monitored performance characteristic as indicating a problem with the network connection, altering the connection by changing at least one resource defining the connection to a resource selected from the inventory of available resources by changing the Internet Protocol, IP, address of a socket defining the connection.

9. A method as claimed in claim 8, wherein the monitored performance characteristic comprises the existence of the connection between a client (102) and a server (110).

10. A method as claimed in claim 8, wherein the monitored performance characteristic is indicative of the response time of the connection.

11. A method as claimed in claim 8, wherein the socket defining the connection is a server (110) side socket.

12. A method as claimed in claim 8, further comprising identifying a client (102) and a server (110) as supporting migration of the connection prior to establishing the connection.

13. A method as claimed in claim 8, wherein the socket defining the connection is a client (102) side socket.

14. A computer program comprising code means for carrying out each of the steps of the method according to any one of claims 8 to 13.

## Patentansprüche

1. Datenverarbeitungssystem (100) das zumindest einen mit dem Speicher (204) verbunden Prozessor (201) enthält, wobei das Datenverarbeitungssystem Folgendes umfasst:
ein Computermittel (505) zur Überwachung zumindest eines Leistungskennwerts einer Netzwerkverbindung;
ein Computermittel (503) zur Aufrechterhaltung eines Bestands an Ressourcen, die zur Bereitstellung von Netzwerkverbindungen verfügbar sind; und
ein Computermittel (501) zur Änderung der Verbindung in Reaktion auf die Feststellung eines von dem überwachten Leistungskennwert angezeigten Problems mit der Netzwerkverbindung, indem zumindest eine die Verbindung definierende Ressource auf eine Ressource, die aus dem Bestand an verfügbaren Ressourcen ausgewählt wird, geändert wird, indem die Internetprotokoll-Adresse (IP-Adresse) eines die Verbindung definierenden Socket geändert wird.

2. Datenverarbeitungssystem nach Anspruch 1, bei dem der überwachte Leistungskennwert das Bestehen der Verbindung zwischen einem Client (102) und einem Server (110) umfasst.

3. Datenverarbeitungssystem nach Anspruch 2, bei dem das Bestehen der Verbindung durch Erkennen der Anzahl von Paket-Zeitüberschreitungs-Vorfällen überwacht wird.

4. Datenverarbeitungssystem nach Anspruch 1, bei dem der überwachte Leistungskennwert die Antwortzeit der Verbindung anzeigt.

5. Datenverarbeitungssystem nach Anspruch 1, bei dem der die Verbindung definierende Socket ein Socket auf der Seite des Server (110) ist.

6. Datenverarbeitungssystem nach Anspruch 1, das ferner ein Computermittel zur Identifizierung eines die Migration der Verbindung unterstützenden Client (102) und Server (110) vor Herstellung der Verbindung umfasst.

7. Datenverarbeitungssystem nach Anspruch 1, bei dem der die Verbindung definierende Socket ein Socket auf der Seite des Client (102) ist.

8. Verfahren zur Verwaltung einer Netzwerkverbindung zwischen einem Client (102) und einem Server (110) in einem Datenverarbeitungsnetzwerk, wobei das Verfahren Folgendes umfasst:
die Überwachung zumindest eines Leistungskennwerts der Verbindung;
die Aufrechterhaltung eines Bestands an Ressourcen, die zur Bereitstellung von Netzwerkverbindungen verfügbar sind; und
Änderung der Verbindung in Reaktion auf die Feststellung eines von dem überwachten Leistungskennwert angezeigten Problems mit der Netzwerkverbindung, indem zumindest eine die Verbindung definierende Ressource auf eine Ressource, die aus dem Bestand an verfügbaren Ressourcen ausgewählt wird, geändert wird, indem die Internetprotokoll-Adresse (IP-Adresse) eines die Verbindung definierenden Socket geändert wird.

9. Verfahren nach Anspruch 8, bei dem der überwachte Leistungskennwert das Bestehen der Verbindung zwischen einem Client (102) und einem Server (110) umfasst.

10. Verfahren nach Anspruch 8, bei dem der überwachte Leistungskennwert die Antwortzeit der Verbindung anzeigt.

11. Verfahren nach Anspruch 8, bei dem der die Verbindung definierende Socket ein Socket auf der Seite des Server (110) ist.

12. Verfahren nach Anspruch 8, das ferner die Identifizierung eines die Migration der Verbindung unterstützenden Client (102) und Server (110) vor Herstellung der Verbindung umfasst.

13. Verfahren nach Anspruch 8, bei dem der die Verbindung definierende Socket ein Socket auf der Seite des Client (102) ist.

14. Computerprogramm, das Codemittel zur Ausführung jedes Schrittes des Verfahrens gemäß einem der Ansprüche 8 bis 13 umfasst.

## Revendications

1. Système de traitement de données (100) comprenant au moins un processeur (201) relié à une mémoire (204), comprenant :
un moyen informatique (505) destiné à surveiller au moins une caractéristique de performances d'une connexion de réseau,
un moyen informatique (503) destiné à entretenir un inventaire des ressources disponibles pour procurer des connexions de réseau, et
un moyen informatique (501) destiné à modifier la connexion, en réponse à la détermination de la caractéristique de performances surveillée qui indique un problème avec la connexion de réseau, en changeant au moins une ressource définissant la connexion pour une ressource sélectionnée à partir de l'inventaire des ressources disponibles en changeant l'adresse du protocole Internet, IP, d'un point de communication définissant la connexion.

2. Système de traitement de données selon la revendication 1, dans lequel la caractéristique de performances surveillée comprend l'existence de la connexion entre un client (102) et un serveur (110).

3. Système de traitement de données selon la revendication 2, dans lequel l'existence de la connexion est surveillée en détectant le nombre des événements de dépassement de temporisation des paquets.

4. Système de traitement de données selon la revendication 1, dans lequel la caractéristique de performances surveillées est indicative du temps de réponse de la connexion.

5. Système de traitement de données selon la revendication 1, dans lequel le point de communication définissant la connexion est un point de communication du côté serveur (110).

6. Système de traitement de données selon la revendication 1, comprenant en outre un moyen informatique destiné à identifier un client (102) et un serveur (110) comme acceptant une migration de la connexion avant d'établir la connexion.

7. Système de traitement de données selon la revendication 1, dans lequel le point de communication définissant la connexion est un point de communication du côté client (102).

8. Procédé de gestion d'une connexion de réseau entre un client (102) et un serveur (110) dans un réseau de traitement de données, comprenant :
la surveillance d'au moins une caractéristique de performances de la connexion,
l'entretien d'un inventaire des ressources disponibles destinées à procurer des connexions de réseau, et
en réponse à la détermination de la caractéristique de performances surveillée qui indique un problème avec la connexion de réseau, la modification de la connexion en changeant au moins une ressource définissant la connexion en une ressource sélectionnée à partir de l'inventaire des ressources disponibles en changeant l'adresse du protocole Internet, IP, d'un point de communication définissant la connexion.

9. Procédé selon la revendication 8, dans lequel la caractéristique de performances surveillée comprend l'existence de la connexion entre un client (102) et un serveur (110).

10. Procédé selon la revendication 8, dans lequel la caractéristique de performances surveillée est indicative du temps de réponse de la connexion.

11. Procédé selon la revendication 8, dans lequel le point de communication définissant la connexion est un point de communication du côté serveur (110).

12. Procédé selon la revendication 8, comprenant en outre l'identification d'un client (102) et d'un serveur (110) comme acceptant une migration de la connexion avant d'établir la connexion.

13. Procédé selon la revendication la revendication 8, dans lequel le point de communication définissant la connexion est un point de communication du côté client (102).

14. Programme informatique comprenant un moyen de code destiné à exécuter chacune des étapes du procédé selon l'une quelconque des revendications 8 à 13.
